# EUROPEAN PATENT APPLICATION

(11) **EP 1 166 638 A2**
(43) Date of publication of application: **02.01.2002**
(21) Application number: 00830516.1
(22) Date of filing: 20.07.2000
(51) Int. Cl.: A23B 9/00, A23B 9/10, A01M 1/00

(54) **A process for the cold disinfestation of cereals by means of liquid nitrogen**

(30) Priority: 27.06.2000 IT MC200058
(71) Applicant: Del Prete, Angelo, 47048 San Giovanni in Marignano (RN) (IT)
(72) Inventor: Del Prete, Angelo, 47048 San Giovanni in Marignano (RN) (IT)
(74) Representative: Baldi, Claudio

(57) **Abstract**

The present invention relates to a process for the cold disinfestation of cereals characterized in that it provides for the introduction of liquid nitrogen by means of administration pipes at the base of the mass of cereals stocked in silos.

## Description

The present patent application for industrial invention relates to a process for the cold disinfestation of cereals by means of liquid nitrogen.

As it is known, disinfestation is carried out before stocking cereals in order to eliminate all the parasites that they normally contain.

Various disinfestation techniques have been developed throughout time. In particular, in 1995 the owner of this patent application (Angelo Del Prete) developed a disinfestation technique based on the principle of bringing the temperature of the stocked cereal below -15°C, since no parasites can survive at such temperature.

This technology was the object of the patent application for industrial invention filed on 07.02.95 by Del Prete and granted under no. 11278030.

Within the same basic principle of disinfesting cereals through a reduction in temperature, the main purpose of the present invention is to cool the mass of cereals more practically, economically and effectively compared to the process protected by the aforementioned Italian patent.

A brief description of the process patented in 1995 will help to better understand the characteristics of the new process.

The 1995 process is basically based on the principle of cooling the mass of cereals to disinfest by means of dry ice blocks (actually CO₂ with -78.8 °C temperature).

More precisely, the blocks are placed inside the pipes of the ventilation system located at the base of the silo and ending on the bottom of the silo. Compressed air is then introduced into the ventilation system. Because of the contact with dry ice, the compressed air is instantaneously cooled (down to a temperature ranging between -40 and -50°C).

The cooled air then penetrates inside the silo through the pipes of the ventilation system and attacks the cereal mass contained in the silo, bringing its temperature below the limit value of -15°C, which is lethal for all parasites.

The 1995 process also comprises another embodiment aimed to maintain the temperature that was drastically reduced with compressed air under a temperature ranging between -8 and -10 °C. In order to do this, some dry ice blocks are placed over the cereal mass contained in the silo.

As a matter of fact, dry ice sublimates in contact with air and, being heavier than air, the cold gas that is originated spontaneously tends to go down because of gravity, thus attacking the mass of cereals below.

Apart from the good practical results of the 1995 process, it must be recognized that this process is partially impaired by the presence of difficulties, as well as management and realization costs.

One of the main difficulties refers to the fact that the weight of the CO₂ produced through the sublimation of dry ice is higher than air. Especially during the first stage when the temperature of the cereals is reduced drastically, this requires the deployment of the compressed air ventilation system located on the bottom of the silos.

In turn, this involves a modification of the traditional structure of silos in order to provide them with a compressed air ventilation system, with considerable costs and practical difficulties, also in view of the necessary maintenance operations of the system.

Another limitation of the 1995 process is related to the fact that the reduction in temperature below the set values requires long operating times (i.e. some weeks). Moreover, sometimes the reduction is not uniform on the entire mass of cereals contained in the silo.

In view of the weak points of the 1995 process, the owner of this patent application has developed a new technology capable of reducing the temperature of the mass of cereals with E941 liquid nitrogen (N) for food production (also defined as liquefied cryogenic gas), that is a substance capable of assuming the gaseous state.

According to the process of the present invention, the main characteristic of this substance is that the originated gas is lighter than air and therefore ― unlike CO² ― it spontaneously tends to move upwards.

This means that liquid nitrogen is introduced at the base of the cereal mass, without a particular pressure and, after sublimating to the gaseous state, it rises through the entire mass of cereals, thus cooling it.

In view of the above, the first advantage of the new process according to the present invention becomes evident with respect to the 1995 process: the use of liquid nitrogen eliminates the need of providing a sophisticated ventilation system inside the silos used to contain cereals.

The only necessary operation will be the installation of simple pipes on the walls or the bottom of the silo in order to "pour" the suitable quantity of liquid nitrogen inside it.

A more practical, economical solution might be represented by the "administration" of liquid nitrogen by means of simple probes not incorporated into the silo structure, but capable of reaching the bottom of the cereal mass.

The tests carried out during the development of the process according to the present invention have shown at least two additional advantages compared to the 1995 process.

The cooling obtained with liquid nitrogen is much faster (i.e. some days) and much more uniform on the mass of cereals compared to the cooling obtained with the dry ice technology.

## Claims

1. A process for the cold disinfestation of cereals, **characterized in that** it provides for the introduction of liquid nitrogen by means of administration pipes at the base of the mass of cereals stocked in silos.

2. A process according to the previous claim, **characterized in that** the liquid nitrogen is introduced into the cereal mass by means of pipes installed on the walls or the bottom of the silo.

3. A process according to claim 1), **characterized in that** the liquid nitrogen is introduced into the mass of cereals by means of simple probes not incorporated into the silo structure, but capable of reaching the bottom of the cereal mass.
